**Europäisches Patentamt**

**European Patent Office**

**Office européen des brevets**

(19)

(11) Veröffentlichungsnummer: **0 042 507**
**B1**

## (12) EUROPÄISCHE PATENTSCHRIFT

(45) Veröffentlichungstag der Patentschrift:
07.03.84

(21) Anmeldenummer: **81104205.0**

(22) Anmeldetag: **02.06.81**

(51) Int. Cl.³: **C 09 B 67/50,** C 09 B 47/067,
C 09 D 5/00

(54) **Neue Pigmentform des beta-Kupferphthalocyanins und dessen Verwendung.**

(30) Priorität: **25.06.80 DE 3023722**

(43) Veröffentlichungstag der Anmeldung:
**30.12.81 Patentblatt 81/52**

(45) Bekanntmachung des Hinweises auf die Patenterteilung:
**07.03.84 Patentblatt 84/10**

(84) Benannte Vertragsstaaten:
**CH DE FR GB IT LI**

(56) Entgegenhaltungen:
**FR - A - 2 089 246**
**FR - A - 2 107 595**

(73) Patentinhaber: **BASF Aktiengesellschaft,
Carl-Bosch-Strasse 38, D-6700 Ludwigshafen (DE)**

(72) Erfinder: **Bock, Gustav, Dr., Waldstrasse 16,
D-6730 Neustadt (DE)**
Erfinder: **Fabian, Wolfgang, Dr., Pfarrwaldblick 5,
D-6901 Wilhelmsfeld (DE)**

## Neue Pigmentform des $\beta$-Kupferphthalocyanins und dessen Verwendung

Die Erfindung betrifft eine neue Pigmentform des $\beta$-Kupferphthalocyanins und dessen Verwendung.

Die neue Pigmentform des $\beta$-Kupferphthalocyanins (CuPc) ist dadurch gekennzeichnet, dass das Pigment zu mindestens 50, vorzugsweise zu 70 Gew.-%, und darüber aus Plättchen besteht, die mindestens 10 µm lang und mindestens 3 µm breit sind und wobei das Verhältnis von Länge zu Breite mindestens 3,3:1 ist und das Pigment zwischen 610 und 640 und zwischen 710 und 740 nm je ein Reflexionsmaximum aufweist.

Die neue Pigmentform liefert in Druck- und Lackfarben optische Effekte, die denen von Metallics nahekommen. So erhält man z.B. in einem Einbrennlack eine deckende Lackierung, die je nach dem Auffallwinkel des Lichts rötlich braun oder blaugrau metallic glänzend ist.

Lackierungen, die mit den neuen CuPc-Pigmenten gemäss der vorliegenden Erfindung hergestellt worden sind, unterscheiden sich im sichtbaren Bereich des Spektrums zwischen 350 und 750 nm in der Remissionskurve signifikant von Lackierungen, die mit CuPc-Pigmenten des Standes der Technik erhalten werden.

Die Remissionskurven von deckenden Purtonfärbungen mit bekannten CuPc-Pigmenten sind nahezu gerade Linien, die parallel zur Grundlinie laufen, d.h. nahezu das gesamte einfallende Licht wird absorbiert. Nur 4 bis 6% des Lichtes werden reflektiert. Dementsprechend hat der Betrachter der Färbung einen dunklen, blauen Farbeindruck. Der blaue Farbeindruck wird durch ein flaches Reflexionsmaximum bei 460 nm verursacht. Dieses Maximum liegt ungefähr 2% oberhalb der Basisreflexion von 4%. Am Ende des sichtbaren Bereiches bei 710 bis 750 nm steigt die Reflexion wieder flach auf ca. 6% bei 750 nm an.

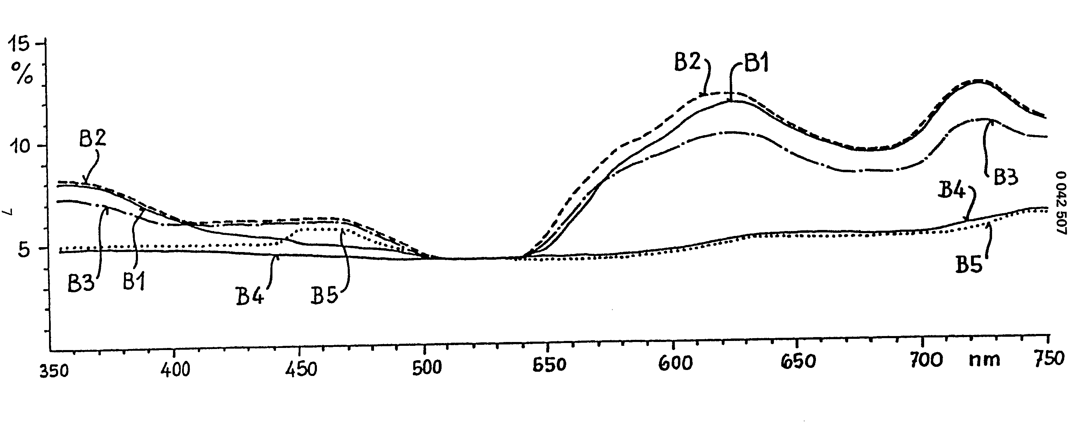

Demgegenüber zeigen die neuen CuPc-Pigmente eine deutliche Remission oberhalb 550 nm. Diese erreicht zwischen 610 und 640 ein Maximum, das 5 bis 7% über der Reflexionskurve der bekannten CuPc-Pigmente liegt. Ein zweites Reflexionsmaximum von gleicher Höhe wird im Bereich zwischen 710 und 740 nm gefunden (Abb. 1, Anlage). Dementsprechend weist die farbmetrische Auswertung der Remissionskurven nach DIN 6174 von Lackierungen, die das neue CuPc-Pigment enthalten, mit den drei zur Ermittlung des Farbortes erforderlichen Kennzahlen: Lightness (L) (= Helligkeit), Farbtonwinkel (HGD) und Chroma (C) (= Reinheit des Farbtons) neue Farbtöne auf.

Die Helligkeit L liegt mit $L \geqslant 25$ signifikant über dem Wert der CuPc-Pigmente des Standes der Technik, die Werte für $L \leqslant 20$ aufweisen.

Der Farbtonwinkel HGD beschreibt mit Werten zwischen 15 und 33 rötliche Farbtöne (blaue Farborte liegen bei HGD 270, der Purpurbereich zwischen HGD 270 und 360 und rot beginnt mit Null). Die bekannten bräunlich dunklen CuPc-Pigmente liegen bei $HGD \leqslant 10$ und die bläulich dunklen im Purpurbereich ungefähr bei HGD 320.

Auch in der Reinheit des Farbtons (Chroma) sind die neuen CuPc-Pigmente denen des Standes der Technik überlegen. Erstere liegen mit $C \geqslant 15$ deutlich über den Werten der CuPc-Pigmente des Standes der Technik, bei denen C maximal den Wert 10 erreicht.

Durch Variation der Reaktionsbedingungen können Pigmentformen erhalten werden, die im Lack leuchtend goldbraune bis dunkelbraune oder leuchtend rotbraune bis gelbbraune Metalliceffekte geben. Diese Befunde sind überraschend. Dem Fachmann ist bekannt, dass mit dem bekannten $\beta$-CuPc, das aus Teilchen zwischen 1 und 20 µm Länge besteht, nur coloristisch wertlose stumpfe, fast schwarze Färbungen erhalten werden. Die wertvollen blauen Pigmentformen werden aus diesen Rohfarbstoffen erst nach Zerkleinerung der Teilchen und deren Formierung in sog. Finishverfahren erhalten.

Überraschend war, dass durch Vergrössern der Kristalle des CuPc auf oberhalb 10 µm Pigmentformen entstehen, die metallicartige Effekte geben. Aufgrund seiner Kenntnis hätte der Fachmann erwarten müssen, dass durch die Vergrösserung coloristisch wertlose, farbschwache Pigmentformen entstehen würden.

Die neue Pigmentform kann 10 Gew.-% und darüber an Plättchen von 100 bis etwa 150 µm Länge enthalten. In der dritten Dimension, der Dicke, ist die neue Pigmentform klein. Die Dicke der Kristalle beträgt ungefähr 1 µm.

Die Breite der Plättchen liegt zwischen 33 und 100% der Länge, wobei Pigmente mit einem Verhältnis von Länge:Breite von 1:0,33 bis 1:0,6 am häufigsten sind.

Nach dem Ergebnis der übrigen gebräuchlichen Methoden zur Charakterisierung von Pigmenten wie Elementaranalyse, Röntgenbeugungs- und IR-Spektrum liegt ein CuPc der $\beta$-Modifikation vor.

Die neue Pigmentform hat ein Schüttgewicht von $\leqslant 300$ g/l, insbesondere von $\leqslant 200$ g/l.

Das neue CuPc-Pigment wird direkt bei der Synthese erhalten. Hierzu wird feinteiliges Kupferpulver in Nitrobenzol mit o-Phthalodinitril in Gegenwart von Ammoniak und Molybdänsäureanhydrid als Katalysator umgesetzt.

Um die erfindungsgemässe Pigmentform zu erhalten, müssen die Ausgangsstoffe die im folgenden angegebenen Kriterien erfüllen und die Reaktionsbedingungen eingehalten werden.

Das verwendete Kupferpulver muss so feinteilig sein, dass es ohne Rückstand ein Sieb von 0,1 mm Maschenweite passiert. Ausserdem soll es zu mehr als 98 Gew.-% aus Kupfer bestehen.

Vor allem aber muss das verwendete o-Phthalodinitril genügend rein sein. Es muss in aromatischen Lösungsmitteln, wie Xylol, Chlorbenzol oder Nitrobenzol ohne Rückstand löslich sein und darf höchstens 1,5, vorzugsweise höchstens 1 Gew.-% an den Isomeren Terephthal- und/oder Isophthalsäuredinitril und/oder an anderen Nitrilen wie Tolunitril enthalten. Je reiner das verwendete o-Phthalodinitril ist, um so leichter wird die neue Pigmentform des CuPc erhalten. So erhält man mit o-Phthalodinitril, dessen Reingehalt $\geq$ 99,9 Gew.-% beträgt, ein plättchenförmiges CuPc-Pigment, das mehr als 80 Gew.-% an Teilchen $\geq$ 20 µ enthält. Demgegenüber erhält man mit einem o-Phthalodinitril, das 2 bis 4 Gew.-% an den isomeren Dinitrilen und/oder anderen Nitrilen enthält, ein CuPc, das neben Plättchen von unterhalb 10 µm Länge bereits erhebliche Anteile an nadelförmigen $\beta$-CuPc-Kristallen erhält. Bei einem Gehalt von mehr als 4 Gew.-% an den isomeren Dinitrilen und/oder anderen Nitrilen entsteht im wesentlichen nur noch $\beta$-CuPc in der (bekannten) Nadelform.

Die Reinheit der übrigen zur Herstellung benötigten Stoffe ist nicht so kritisch. Die handelsüblichen technischen Qualitäten sind genügend rein.

Das Verhältnis o-Phthalodinitril zu Lösungsmittel liegt in der Regel zwischen 1:2,5 und 1:10, vorzugsweise zwischen 1:3,5 bis 1:4,5 Gewichtsteilen.

Die Menge an Kupferpulver beträgt höchstens, die stöchiometrisch erforderliche Menge, d.h. 0,25 Eq je Mol o-Phthalodinitril. Vorzugsweise wendet man jedoch Phthalodinitril im Überschuss an, damit bei der Isolierung ein von Kupferpulvern freies Verfahrensprodukt erhalten wird. In der Regel wendet man daher einen bis zu 10%igen, vorzugsweise einen 2- bis 6%igen Überschuss an Dinitril an.

Die Menge an Molybdänsäure liegt zwischen 0,001 und 0,15, vorzugsweise zwischen 0,01 und 0,1 Gew.-%, bezogen auf o-Phthalodinitril, und liegt damit unterhalb der üblicherweise bei der Herstellung von CuPc aus o-Phthalodinitril angewendeten Menge Molybdänsäure(anhydrid).

Zur Herstellung der neuen Pigmentform verfährt man so, dass man das o-Phthalodinitril und das Kupferpulver im Lösungsmittel, vorzugsweise Nitrobenzol, unter einer Ammoniakatmosphäre bei Temperaturen zwischen 70 bis 100°C mit Ammoniak sättigt, dann auf 145 bis 210°C, vorzugsweise auf 180 bis 205°C erwärmt und erst 30 bis 60 min, nachdem die Reaktionstemperatur erreicht worden ist, das als Katalysator erforderliche Molybdänsäureanhydrid zugibt. Bei der Umsetzung soll zu starkes Rühren vermieden werden. Das Reaktionsgemisch wird nur so gerührt, dass sich das Kupferpulver gerade nicht absetzt. Bei der Umsetzung sind alle Massnahmen zu vermeiden, durch welche die Bildung von vielen Kristallkeimen und damit die Bildung von nadelförmigem $\beta$-CuPc begünstigt wird. Aus diesem Grunde sollen auch keine Reaktionsbeschleuniger wie Kupfer (I) salze oder Ammoniumsalze im Reaktionsgemisch zugegen sein.

Die Reaktion wird so geführt, dass die exotherme Bildung des CuPc über einen längeren Zeitraum erfolgt. So hat sich bei 200°C eine Reaktionsdauer von 4 bis 20 h als günstig erwiesen. Nach 4 h liegt bereits die neue Pigmentform vor, jedoch beträgt die Ausbeute gelegentlich nur um 80% der Theorie. Nach 16 bis 20 h bei 200°C wird eine Ausbeute von oberhalb 90% der Theorie sicher erreicht.

Die Form, die Grösse und die Teilchengrössenverteilung können bei der Reaktion durch Variation der Temperatur, durch Zugabe geringer Mengen eines niederen Alkohols, vorzugsweise Methanol beim Aufheizen des Reaktionsansatzes und/oder der angewendeten Menge Molybdänsäureanhydrid in gewissem Masse beeinflusst werden. Hierdurch können Pigmentformen erhalten werden, die in Lack- und Druckfarben unterschiedliche Nuancen aufweisen. Auf diese Weise können Pigmentformen hergestellt werden, die in Lacken leuchtend goldbraune bis dunkelbraune oder leuchtend rotbraune bis gelbbraune Effekte geben.

Die grössten Plättchen mit Kantenlängen von um 10 µm und fast quadratischer Form (Verhältnis von Länge: Breite = 1:1 bis 1:0,6) werden unter den obengenannten optimalen Bedingungen nach etwa 4 h Reaktionszeit erhalten. Diese Plättchen geben Lackierungen, die goldbraune Metalleffekte zeigen. Das Pulver als solches glitzert rötlich. Bei Anwendung höherer Konzentration der Reaktionspartner im Reaktionsgemisch, durch erhöhte Rührgeschwindigkeit oder durch Zugabe erhöhter Mengen an Molybdänsäureanhydrid wird das Kristallwachstum vermindert. Auch die Zugabe geringer Mengen eines niederen Alkohols, vorzugsweise Methanol, zum Reaktionsgemisch beim Aufheizen hat Einfluss auf die Plättchenform, obwohl der Alkohol vor Beginn der eigentlichen Reaktion wieder ausdestilliert wird. In den Lackierungen verschwindet mehr und mehr der goldfarbene Metalliceffekt. Der Farbton verschiebt sich nach einem rötlichen Violett.

Arbeitet man in Gegenwart von Reaktionsbeschleunigern, wie Kupfer(I)salzen oder mit nicht genügend reinem o-Phthalodinitril, dann erhält man unter den oben angegebenen Bedingungen Nadeln, deren Breite um 1 µm oder weniger ist. Mit diesem CuPc erhält man trübe, bräunlich blaue bis dunkelblaue Lackierungen. Offenbar wird das Licht nicht mehr spiegelnd reflektiert, wenn die Teilchenbreite unter einem Grenzwert von etwa 1 µm absinkt.

Die üblichen nadelförmigen CuPc geben keine Metalleffekte, selbst dann nicht, wenn die Nadeln bei 1 µm Breite Längen bis zu 100 µm aufweisen.

Nach Beendigung der Reaktion wird das Pigment in üblicher Weise isoliert. Das plättchenförmige Produkt ist sehr leicht filtrierbar und die Mutterlauge durch Waschen leicht vollständig vom Pigment zu entfernen. Zum Entfernen des hochsiedenden Lösungsmittels wird das Filtergut mit einem niedrigsiedenden Lösungsmittel wie Methanol, Äthanol, Aceton u.ä. gewaschen und dann schonend getrocknet.

Das nach dem Verfahren erhaltene CuPc ist sehr rein. Das plättchenförmige CuPc kann nach Zerkleinerung auch mit Hilfe der üblichen Finishverfahren zu den bekannten feinteiligen Pigmentformen verarbeitet werden.

Die Erfindung soll durch die folgenden Beispiele weiter erläutert werden. Die Prozentangaben beziehen sich auf das Gewicht.

*Bestimmung der Teilchengrössenverteilung:*

An den erhaltenen CuPc-Pigmenten wurde die Verteilung der Teilchengrössen nach 2 Verfahren bestimmt:

1) durch Nasssieben, und
2) nach dem Beugungszählverfahren.

Das Verfahren 1 ist sehr zeit- und arbeitsaufwendig. Das Beugungszählungsverfahren arbeitet rasch, hat aber den Nachteil, dass nur der Bereich zwischen 2 und 170 µm erfasst wird und deshalb Teilchen, die < 2 und > 170 µm sind, gewichtsmässig nicht berücksichtigt werden. Trotzdem wurden nach beiden Verfahren recht gut übereinstimmende Verteilungskurven erhalten.

Die an den Proben gemessene Grössenverteilung wurde in den Tabellen 1 (Nasssiebanalyse) und 2 (Beugungszählung) zusammengestellt.

*Beispiel 1:*

a) In einem 1-l-Dreihalskolben, bestückt mit Thermometer, Blattrührer, Rückflusskühler und einem kurzen Gaseinleitungsrohr, das nicht in die Flüssigkeit eintaucht, werden 108 g isomerenfreies o-Phthalodinitril (Gehalt: 99,8%, gaschromatographisch bestimmt), 12,6 g feinteiliges Kupferpulver (Firma Schlenk) und 400 g Nitrobenzol eingefüllt. Über eine mit Glykol gefüllte Waschflasche wird ein leichter Ammoniakstrom von 1 bis 2 Blasens unter Rühren in die Apparatur gedrückt und die Luft verdrängt. Der Rückflusskühler ist mit einer zweiten, mit Glykol gefüllten Waschflasche verbunden, so dass die Apparatur gegen die Atmosphäre abgeschlossen ist und keine Luft eindringen kann. Nachem die Luft verdrängt ist, wird das Gemisch unter Rühren mit 250 tr/min bei 70 bis 100°C mit Ammoniak gesättigt, in 3 h allmählich und gleichmässig auf 200°C (Innentemperatur) erwärmt und 30 min bei 200°C gehalten. Dann werden 50 mg Molybdänsäureanhydrid zugegeben und bei 200°C gerührt. Nach etwa 3 h hat sich eine dicke, gerade noch rührbare Reaktionsmasse gebildet, die beim Beleuchten rötlich bronziert. Es wird insgesamt 5 h nach der Molybdänoxidzugabe bei 200°C gehalten. Dann wird das Reaktionsgemisch auf 150°C gekühlt und auf einer groben Glasfilternutsche (GO) abgesaugt, das Filtergut mit Nitrobenzol bis zum hellen Ablauf und dann mit Methanol nitrobenzolfrei gewaschen. Der so erhaltene Filterkuchen wird bei 70°C getrocknet. Man erhält 107 g Kupferphthalocyanin der β-Modifikation in Form eines glänzenden, rötlich spiegelnden lockeren Pulvers mit einem Schüttgewicht von 200 g/l. Das Produkt kann direkt zur Herstellung von Effektlacken verwendet werden.

*Analyse* für $C_{32}H_{16}N_8Cu$ (Molekulargewicht 575,5):

ber.: C 66,8   H 2,78   N 19,5   Cu 11,04%
gef.: C 66,2   H 3,0    N 18,9   Cu 11,2 %

Wird eine Probe von ca. 1 mg auf einem Objektträger mit einem Tropfen Leinöl verrieben und mit einem Deckplättchen abgedeckt, so erkennt man unter dem Mikroskop bei 100facher Vergrösserung die Kristalle als grobe Plättchen, die zum Teil fast quadratisch aussehen. Der Anteil an Teilchen ≤ 10 µm ist sehr gering.

Mehr als die Hälfte der Teilchen ist länger als 50 µm und ca. 10 bis 40 µm breit. Lässt man das einstrahlende Licht schräg auffallen, so erkennt man ein bräunliches Glitzern oder Spiegeln und die eigenartige an den Kanten verzahnte Struktur dieser Plättchen.

An je einer Probe des CuPc-Pigments wurde die Teilchengrössenverteilung mit Hilfe der Nasssiebanalyse und durch Beugungszählung (Mikrotak) bestimmt. Die Ergebnisse sind in den Tabellen 1 und 2 zusammengestellt. Über 90% der Teilchen sind > 20 µm.

b) 8 g des nach a erhaltenen Pigmentes werden in 92 g eines Alkyd/Melamin-Einbrennlackes (≙ 35% Lack. ber. trocken) durch Einrühren mit einem Dissolver verteilt. Der so erhaltene Buntlack wird auf ein Aluminium- oder gebondertes Stahlblech gespritzt, bis der Untergrund abgedeckt ist. Nach einer Ablüftzeit von 15 min wird die Lackierung mit einem klaren Acrylat/Melamin-Einbrennlack (ca. 35% Trockengehalt) überspritzt und die Lackierung nach dem Ablüften (30 min) bei 130°C 30 min eingebrannt. Man erhält eine hochglänzende Lackierung mit einem dem Metalleffekt ähnlichen Charakter. Je nach Auffallwinkel des Lichtes empfindet der Betrachter leuchtend goldbraune bis blaugraue oder braune Farben mit einem deutlichen Gelbstich.

Die Remisssionskurve der Lackierung, die unter Bestrahlen mit sichtbarem Licht der Normlichtart D im Bereich zwischen 350 und 750 nm aufgenommen wurde (Spectronic 505 der Fa. Bausch & Lomb, Rochester, N.Y.), zeigt ab etwa 570 nm eine Remission zwischen 7 und 12% mit zwei leichten Maxima bei 630 und 720 nm (vgl. Kurve B1 der Abbildung).

Die farbemetrische Auswertung der Remissionskurve nach Cielab (DIN 6174), Lightness L = 27,0, Farbtonwinkel HGD = 33,3°, Chroma C = 20,5, entspricht einem gelbstichigen warmen Braunton.

*Beispiel 2:*

Man arbeitet wie in Beispiel 1, setzt jedoch 75 mg Molybdänsäureanhydrid zu. Ausbeute: 105 g eines plättchenförmigen, rotstichig blau glitzernden β-Kupferphthalocyanins, das ähnliche Eingenschaften wie das nach Beispiel 1 erhaltene hat. Das Ergebnis der Teilchengrössenverteilungsanalyse ist in den Tabellen 1 und 2 zusammengestellt. Über 80% der Teilchen sind > 20 µm.

Im Einbrennlack erhält man eine blaustichig rötliche Lackierung, die im auffallenden Licht lebhaft bronziert und glitzert. Die Remissionskurve der Lackierung, aufgenommen unter Bestrahlen mit Licht der Normlichtart D auf einem Spektrographen (Spectronic der Fa. Bausch & Lomb, Rochester, N.Y.) zeigt ab etwa 570 nm 7 bis 12% Remission mit 2 leichten Maxima bei 630 und 720 nm, die etwas flacher sind als die der Lackierung mit dem Pigment des Beispiels 1 (vgl. Kurve B2 der Abbildung).

*Beispiel 3:*

Man arbeitet wie in Beispiel 1a, rührt jedoch mit 400 tr/min, gibt als Lösungsmittel zusätzlich 18 g Methanol zu und hält die Temperatur des Reaktionsgemisches bei 70°C, bis dieses mit Ammoniak gesättigt ist (Dauer: ca. 1 h). Dann wird wie in Beispiel 1a angegeben aufgeheizt, wobei das Methanol abdestilliert. Die Temperatur im Reaktionsgemisch wird auf 190°C eingestellt. 30 min nach Erreichen dieser Temperatur werden 100 mg Molybdänsäureanhydrid zugegeben und weiter wie in Beispiel 1a verfahren. Ausbeute: 106 g β-CuPc in Form von feinteiligeren Plättchen als bei einem der beiden Beispiele 1 oder 2 (vgl. Tabellen 1 und 2).

Im Einbrennlack erhält man einen violett rotstichigen Farbton mit zarter Lasur und zartem Glitzereffekt. Die Remissionskurve der Lackierung zeigt im sichtbaren Bereich des Spektrums bei 550 nm einen Anstieg und hat bei 630 und 720 nm zwei flache Maxima mit 10% Remission (Abb., Kurve B3).

Die farbmetrische Auswertung nach Cielab, DIN 6174, zeigt mit L = 26,5, HGD = 16,7° und C = 16,5 einen relativ dunklen Rotton, der jedoch heller und reiner ist als der mit den Pigmenten der Beispiele 4 und 5.

*Beispiel 4:*

Man arbeitet wie in Beispiel 1, verwendet jedoch ein 98,2%iges o-Phthalodinitril, das 0,1% Benzonitril, 0,5% Tolunitril und 1,2% Iso- und Terephthalsäuredinitril enthält.

Ausbeute: 99 g β-CuPc, das im wesentlichen aus nadelförmigen Kristallen besteht. Nach der Teilchengrössenverteilungsanalyse sind weniger als 50% der Teilchen > 20 μm (vgl. Tabellen 1 und 2).

Im Einbrennlack erhält man stumpfe blaustichige dunkelbraune Färbungen, die im auffallenden Licht kein Glitzern mehr zeigen. Die Remissionskurve der Färbung ist zwischen 350 und 750 nm nahezu eine Gerade, die zwischen 4 und 6% Remission liegt. Die farbemetrische Auswertung nach Cielab ergibt mit L = 18,3, HGD = 9,5 und C 5,4 einen deutlich dunkleren und trüberen Farbton als die mit den Pigmenten der Beispiele 1, 2 und 3 erhaltenen Färbungen (Abb., B4).

*Beispiel 5:*

Zum Vergleich wurde β-CuPc nach dem in der DE-C Nr. 1569636, Beispiel 4 beschriebenen Verfahren hergestellt. An dem erhaltenen rohen CuPc wurde die Teilchengrössenverteilung bestimmt. Das Ergebnis ist in den Tabellen 1 und 2 zusammengefasst. Weniger als 20% der Teilchen sind > 20 μm.

Im Einbrennlack erhält man dunkelblau deckende Färbungen. Diese zeigen zwischen 550 und 750 nm in der Remission kein Maximum. Die farbmetrische Auswertung nach Cielab ergibt L = 19, HGD = 521° und C = 8,55 und ist die farbmetrische Beschreibung eines trüben, dunklen Purpurfarbtones (Abb., B5).

*Tabelle 1*
Teilchengrössenverteilung in Gewichtsprozent nach der Nasssiebanalyse

| Teilchengrössen-bereich (μm) | Beispiel 1 (Gew.-%) | Beispiel 2 (Gew.-%) | Beispiel 3 (Gew.-%) | Beispiel 4 (Gew.-%) | Beispiel 5 (Gew.-%) |
|---|---|---|---|---|---|
| 0-10 | 1 | 5 | 32 | 47 | 64 |
| 10-20 | 6 | 9 | 43 | 7 | 14 |
| 20-50 | 26 | 35 | 21 | 19 | 12 |
| 50-100 | 43 | 41 | 3 | 25 | 6 |
| >100 | 24 | 10 | 1 | 2 | 4 |
| Anteil >10 | 99 | 95 | 68 | 53 | 36 |
| Anteil >20 | 93 | 86 | 25 | 46 | 22 |
| Anteil >50 | 67 | 51 | 4 | 27 | 10 |

*Tabelle 2*
Teilchengrössenverteilung in Gewichtsprozent nach der Beugungszähler-Analysenmethode

| Teilchengrössen-bereich (μm) | Beispiel 1 (Gew.-%) | Beispiel 2 (Gew.-%) | Beispiel 3 (Gew.-%) | Beispiel 4 (Gew.-%) | Beispiel 5 (Gew.-%) |
|---|---|---|---|---|---|
| 0-10 | 2 | 8 | 27 | 35 | 53 |
| 10-20 | 7 | 10 | 35 | 17 | 29 |
| 20-50 | 32 | 41 | 38 | 29 | 16 |
| 50-100 | 45 | 32 | 0 | 16 | 2 |
| >100 | 14 | 9 | 0 | 3 | 0 |
| Anteil >10 | 98 | 92 | 73 | 65 | 47 |
| Anteil >20 | 91 | 82 | 38 | 48 | 18 |
| Anteil >50 | 59 | 51 | 0 | 19 | 2 |

### Patentansprüche

1. Kupferphthalocyaninpigment der β-Modifikation, dadurch gekennzeichnet, dass das Pigment zu mindestens 50 Gew.-% aus Plättchen besteht, die mindestens 10 μm lang und mindestens 3 μm breit sind, wobei das Verhältnis von Länge zu Breite mindestens 3,3:1 ist und das Pigment zwischen 610 und 640 und zwischen 710 und 740 nm je ein Reflexionsmaximum aufweist.

2. Pigment gemäss Anspruch 1, dadurch gekennzeichnet, dass das Pigment aus mindestens 70 Gew.-% Plättchen besteht, die mindestens 10 μm lang und mindestens 3 μm breit sind.

3. Verwendung des Kupferphthalocyaninpigments gemäss einem der beiden Ansprüche 1 oder 2 zum Färben von Lacken, Druckfarben und Kunststoffen.

### Claims

1. A copper phthalocyanine pigment in the β-modification, which consists, to the extent of at least 50% by weight, of platelets which are not less than 10 μm long and not less than 3 μm wide, the length/width ratio being not less than 3.3:1, and which has a reflection maximum between 610 and 640 nm and another between 710 and 740 nm.

2. A pigment as claimed in claim 1, which consists, to the extent of at least 70% by weight, of platelets which are not less than 10 μm long and not less than 3 μm wide.

3. The use of a copper phthalocyanine pigment as claimed in claim 1 or 2 for colouring surface coatings, printing inks and plastics.

### Revendications

1. Pigment de phtalocyanine de cuivre de la variété β, caractérisé en ce qu'il est fait d'au moins 50% en poids de lamelles qui mesurent au moins 10 μ de longueur et au moins 3 μ de largeur, le rapport de la longueur à la largeur étant d'au moins 3,3:1, et en ce qu'il présente des maximums de réflexion, respectivement entre 610 et 640 nm et entre 710 et 740 nm.

2. Pigment selon la revendication 1, caractérisé en ce qu'il est fait d'au moins 70% en poids de lamelles qui mesurent au moins 10 μ de longueur et au moins 3 μ de largeur.

3. Utilisation du pigment de phtalocyanine de cuivre selon l'une des revendications 1 ou 2 pour la coloration de vernis, d'encres d'imprimerie et de matières synthétiques.